# EUROPEAN PATENT APPLICATION

(11) **EP 4 443 028 A1**
(43) Date of publication of application: **09.10.2024**
(21) Application number: 22900337.1
(22) Date of filing: 23.11.2022
(51) Int. Cl.: F16K 1/00, F16K 31/02

(54) **ELECTRIC VALVE**

(30) Priority: 02.12.2021 CN 202111457357
(71) Applicant: Zhejiang Dunan Artificial Environment Co., Ltd., Shaoxing Zhejiang 311800 (CN)
(72) Inventor: JIN, Ju, Shaoxing, Zhejiang 311800 (CN); SHA, Haijian, Shaoxing, Zhejiang 311800 (CN); WANG, Fugang, Shaoxing, Zhejiang 311800 (CN)
(74) Representative: Studio Torta S.p.A.
(86) International application number: PCT/CN2022/133684
(87) International publication number: WO 2023/098532

(57) **Abstract**

An electric valve, comprising a valve seat (100), a valve needle (200), a first valve core (310) and a second valve core (320), wherein the valve seat is provided with a valve cavity (110) in which the valve needle is movably arranged; the first valve core is arranged in the valve cavity and is provided with a first through hole (311), the material of the first valve core is a non-metallic material, and the first valve core is located between the valve needle and the opening of the valve cavity; the second valve core is arranged in the valve cavity and is provided with a second through hole (321), the material of the second valve core is metal material, the second valve core is adjacent to the side of the first valve core that faces the valve needle, and the second through hole and the first through hole jointly form a valve port; and when the electric valve is in a fully closed state, the valve needle passes through the second through hole and makes contact with the hole wall of the first through hole to form a seal.

## Description

### CROSS REFERENCING OF RELETED APPLICATIONS

The present disclosure requests the priority of the Chinese application "ELECTRIC VALVE" submitted on December 2, 2021 with application number 202111457357.9, and its entire content is hereby incorporated by reference.

### TECHNICAL FIELD

The present disclosure relates to the technical field of electric valve, in particular to an electric valve.

### BACKGROUND

To avoid the problem of leakage at the valve port, existing electric valves usually use soft sealing to achieve the sealing of the valve port. However, the existing valve cores of electric valves have the following drawbacks due to the above design: for the soft sealed valve port, it is difficult to achieve flow regulation, and the processing difficulty is high.

### SUMMARY

According to one aspect of the present disclosure, an electric valve is provided, wherein the electric valve comprises a valve seat, a valve needle, a first valve core and a second valve core, the valve seat is provided with a valve cavity in which the valve needle is movably arranged; the first valve core is arranged in the valve cavity and is provided with a first through hole, the material of the first valve core is a non-metallic material, and the first valve core is located between the valve needle and an opening of the valve cavity; the second valve core is arranged in the valve cavity and is provided with a second through hole, the material of the second valve core is metal material, the second valve core is adjacent to the side of the first valve core that faces the valve needle, and the second through hole and the first through hole jointly form a valve port; wherein, when the electric valve is in a fully closed state, the valve needle passes through the second through hole and makes contact with the hole wall of the first through hole to form a seal.

### BRIEF DESCRIPTION OF THE DRAWINGS

Figure 1 is a perspective exploded schematic view of an electric valve shown according to an exemplary embodiment;
Figure 2 is a sectional schematic view of the electric valve shown in Figure 1;
Figure 3 is an enlarged sectional schematic view of the partial structure of the electric valve shown in Figure 2;
Figure 4 is an exploded schematic view of the partial structure shown in Figure 3;
Figure 5 is an enlarged schematic view of Part A in Figure 3.

### DETAILED DESCRIPTION

It will now refer to the accompanying drawings to provide a more comprehensive description of the exemplary embodiments. However, the exemplary embodiments can be implemented in multiple forms and should not be understood as limited to the embodiments described herein; on the contrary, providing these embodiments will make the present disclosure comprehensive and complete, and will fully convey the concept of the exemplary embodiments to those skilled in the art. The same reference numbers in the figures represent the same or similar structures, therefore their detailed descriptions will be omitted.

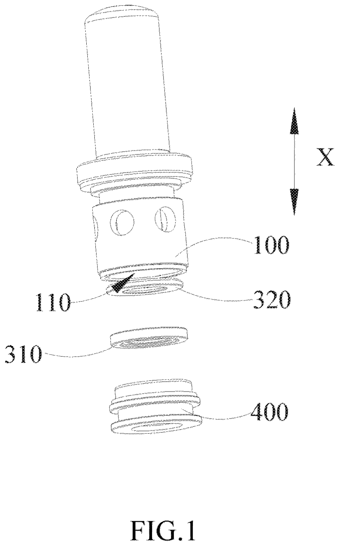

Referring to Figure 1, which is a representative perspective exploded schematic view of an electric valve of the present disclosure. In this exemplary embodiment, the electric valve of the present disclosure is illustrated using an electronic expansion valve as an example. It would be easy for those skilled in the art to understand that various modifications, additions, substitutions, deletions, or other changes have been made to the following specific embodiments in order to apply the relevant designs disclosed herein to other types of electric valves or other valve devices, which are still within the scope of the principles of electric valves of the present disclosure.

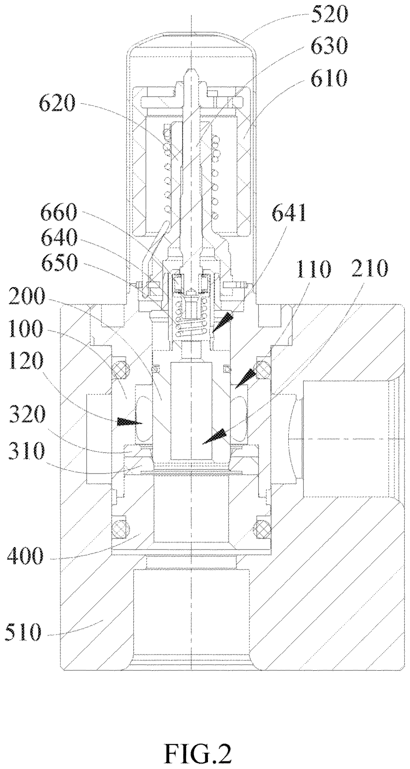

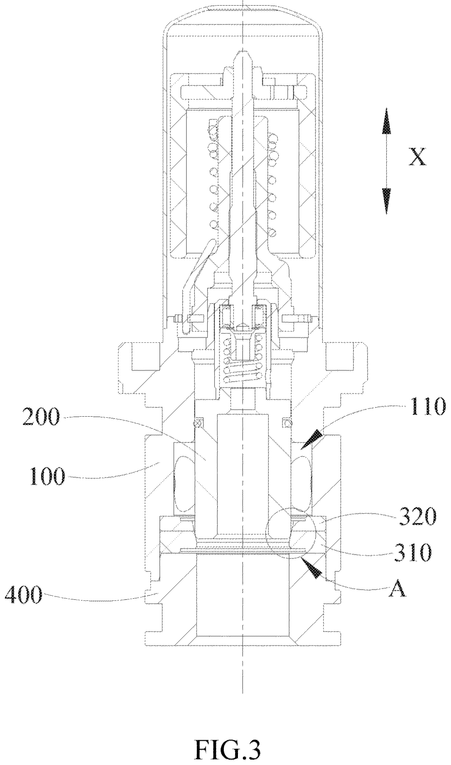

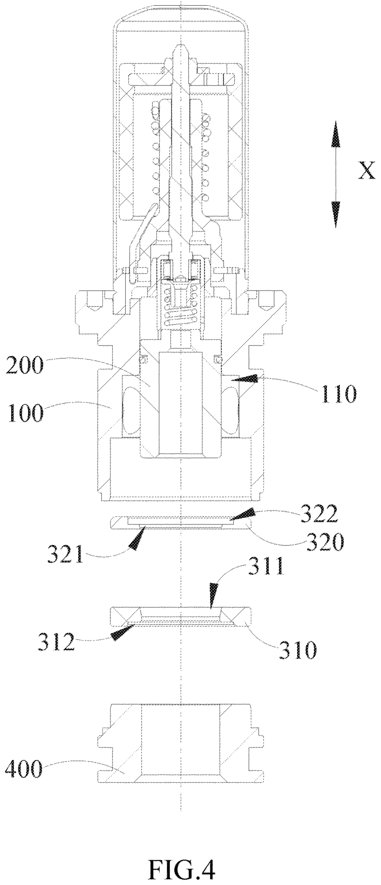

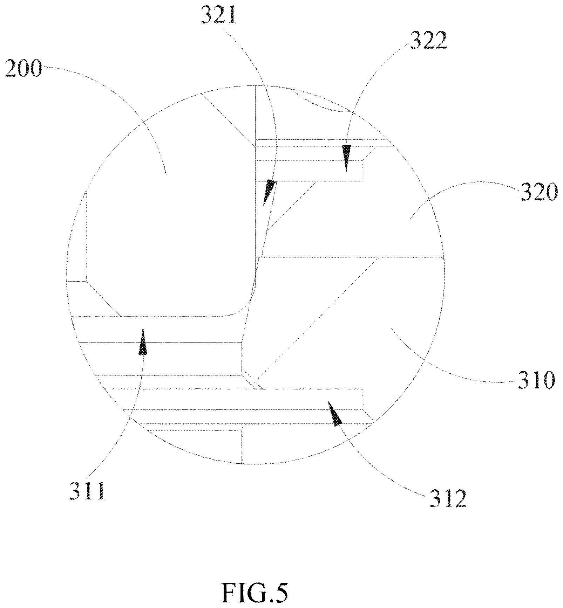

As shown in Figure 1, in this embodiment, the electric valve of the present disclosure comprises a valve seat 100, a valve needle 200, a first valve core 310, and a second valve core 320. Referring to Figures 2 to 5, Figure 2 representatively shows a sectional schematic view of the electric valve that reflects the principles disclosed herein; Figure 3 representatively shows an enlarged sectional view of a partial structure of the electric valve that reflects the principles disclosed herein; Figure 4 representatively shows an exploded schematic view of the partial structure shown in Figure 3; Figure 5 representatively shows an enlarged schematic view of Part A in Figure 3. The following will provide a detailed explanation of the structure, connection methods, and functional relationships of the main components of the electric valve of the present disclosure, in conjunction with the above drawings.

As shown in Figures 1 to 5, in this embodiment, the valve seat 100 has a valve cavity 110. The valve needle 200 is movably arranged in the valve cavity 110, and can be driven by a driving mechanism, so that the valve needle 200 can move along the axial direction X of the valve seat 100. The first valve core 310 is arranged in the valve cavity 110 and has a first through hole 311. The material of the first valve core 310 is non-metallic material, and the first valve core 310 is located between the valve needle 200 and the opening of the valve cavity 110. The second valve core 320 is arranged in the valve cavity 110 and has a second through hole 321. The material of the second valve core 320 is metal, and the second valve core 320 is adjacent to the side of the first valve core 310 facing the valve needle 200. Wherein, the second through hole 321 and the first through hole 311 jointly form the valve port of the electric valve. Based on this, when the electric valve is in a fully closed state, the valve needle 200 passes through the second through hole 321 and contacts the hole wall of the first through hole 311 to form a seal. The present disclosure adopts a design that combines the first valve core 310 with the second valve core 320 to form the valve port, and the first valve core 310 is made of non-metallic material, so that when the first valve core 310 contacts the valve needle 200, it can achieve soft contact between the valve needle 200 and the first valve core 310, thereby ensuring a good sealing effect between the valve needle 200 and the valve port. The second valve core 320 is made of metal material, which is less susceptible to environmental factors such as temperature. So that the second valve core 320 can be easily processed into the required shape to meet the needs of flow regulation, further improving the adjustment accuracy of the electric valve.

Specifically, as shown in Figures 2, 3, and 5, in this embodiment, the inner diameter of the port of the valve port facing the valve needle 200 may be greater than the inner diameter of the port of the valve port facing away from the valve needle 200. On this basis, the inner wall of the valve port smoothly transitions between the two ports mentioned above, which can prevent significant instantaneous changes in flow rate when opening and closing the valve.

Furthermore, as shown in Figure 5, based on the above design of the valve port, in this embodiment, the inner wall of the second through hole 321 can be roughly inclined, that is, the cross-sectional shape of the flow regulation section of the valve port can be roughly inclined. In some embodiments, the inner wall of the valve port can also be other smooth transitional structures, such as roughly arc-shaped, that is, the cross-sectional shape of the valve port is roughly curved and not limited by this.

In some embodiments, the inner wall of the second through hole 321 includes multiple inclined surfaces with different slopes or multiple curved surfaces with different radians to meet the requirements of different flow curves.

Furthermore, as shown in Figure 5, based on the above design of the valve port, in this embodiment, the inner diameter of the orifice of the first through hole 311 facing the valve needle 200 can be equal to the inner diameter of the orifice of the second through hole 321 facing away from the valve needle 200. In some embodiments, the inner diameter of the orifice of the first through hole 311 facing the valve needle 200 may be slightly smaller than the inner diameter of the orifice of the second through hole 321 facing away from the valve needle 200, and is not limited by this.

Furthermore, as shown in Figure 5, based on the above design of the valve port, in this embodiment, the inner diameter of the orifice of the first through hole 311 facing the valve needle 200 can be greater than the inner diameter of the orifice of the first through hole 311 facing away from the valve needle 200. On this basis, the hole wall of the first through hole 311 smoothly transitions between the two aforementioned orifices.

Furthermore, as shown in Figure 5, based on the above design of the first through hole 311, in this embodiment, the inner wall of the first through hole 311 can be roughly inclined, that is, the cross-sectional shape of the first through hole 311 can be roughly inclined. In some embodiments, the inner wall of the first through hole 311 may also be other smooth transitional structures, such as a roughly curved surface, that is, the cross-sectional shape of the first through hole 311 is roughly curved and not limited by this.

Furthermore, as shown in Figure 5, based on the above design of the valve port, in this embodiment, the inner diameter of the orifice of the second through hole 321 facing the valve needle 200 can be greater than the inner diameter of the orifice of the second through hole 321 facing away from the valve needle 200. On this basis, the hole wall of the second through hole 321 smoothly transitions between the two aforementioned orifices.

Furthermore, as shown in Figure 5, based on the above design of the second through hole 321, in this embodiment, the inner wall of the second through hole 321 has a shape of roughly inclined surface, that is, the cross-sectional shape of the second through hole 321 can be roughly inclined. In some embodiments, the inner wall of the second through hole 321 may also be other smooth transitional structures, such as a roughly curved surface, that is, the cross-sectional shape of the second through-hole 321 is roughly curved and not limited to this.

Alternatively, as shown in Figures 1, 4, and 5, in this embodiment, along the axial direction X of the valve seat 100, the thickness of the first valve core 310 may be greater than that of the second valve core 320. In some embodiments, the thickness of the first valve core 310 can also be equal to or slightly less than the thickness of the second valve core 320, and can be flexibly adjusted according to sealing requirements and flow adjustment needs, but not limited to this.

Alternatively, as shown in Figure 5, in this embodiment, the first valve core 310 can be formed with a first annular groove 312, which is formed at the periphery of the orifice of the side of the first through hole 311 facing away from the valve needle 200.

Alternatively, as shown in Figure 5, in this embodiment, the second valve core 320 can be formed with a second annular groove 322, which is formed at the periphery of the orifice of the side of the second through hole 321 facing the valve needle 200.

Alternatively, in this embodiment, the material of the first valve core 310 may be PTFE. In some embodiments, the material of the first valve core 310 can also be other non-metallic materials, such as PPS, PEAK or nylon, but not limited to this.

Alternatively, in this embodiment, the material of the second valve core 320 can be stainless steel or aluminum.

Alternatively, as shown in Figures 1 to 4, in this embodiment, the electric valve of the present disclosure may also include a valve core sleeve 400. Specifically, the valve core sleeve 400 is partially provided in the valve cavity 110, and the valve core sleeve 400 is adjacent to one side of the first valve core 310 facing away from the valve needle 200. Wherein, the valve core sleeve 400 is provided with a channel that runs through both ends along the axial direction X, which channel is connected to the valve port jointly formed by the first through hole 311 and the second through hole 321, and specifically connected to the orifice of the side of the first through hole 311 facing away from the valve needle 200.

As shown in Figure 2, in this embodiment, the valve seat 100 is provided with a flow hole 120.

As shown in Figure 2, in this embodiment, the electric valve further comprises an installation substrate 510 and a sleeve 520. The installation substrate 510 is provided with an installation cavity, and the valve seat 100, first valve core 310, second valve core 320, and valve core sleeve 400 are installed within the installation cavity, and can be detachably connected to the installation cavity.

As shown in Figure 2, in this embodiment, the driving mechanism includes a rotor assembly 610 and a nut assembly 620 set in the sleeve 520. The rotor assembly 610 is sleeved on the outer side of the nut assembly 620, and one end of a screw 630 away from the valve needle 200 is fixedly connected to the rotor assembly 610. The rotor assembly 610 drives the valve needle 200 to move in the axial direction X through the screw 630 to adjust the opening of the valve. The nut assembly 620 provided with an internal thread is threaded to the valve needle 200, and the nut assembly 620 is fixedly connected to the valve seat 100.

As shown in Figure 2, in this embodiment, the electric valve further comprises the screw 630, a spring sleeve 640, a spring 650, and a rotating member 660 (such as a bearing). One end of the spring sleeve 640 is sleeved (sheathed) at the end of the valve needle 200, the spring 650 is installed inside the spring sleeve 640, and the spring sleeve 640 has a balance hole 641. The screw 630 is set at the other end of the spring sleeve 640; the bearing is sleeved on the screw 630, and the bearing is located between the screw 630 and the spring sleeve 640. Due to the presence of the bearing between the screw 630 and the spring sleeve 640, the seal between the first valve core 310 and the valve seat 100 is soft seal, so that the frictional force between the first valve core 310 and the screw 630 is less than the frictional force between the valve core and the valve seat 100, avoiding the problem of wear on the soft sealed valve port.

As shown in Figure 2, in this embodiment, a balance channel 210 is provided inside the valve needle 200 to balance the pressure at both ends of the valve needle 200. The balance channel 210 includes a first section near the spring sleeve 640 and a second section near the valve port. The inner diameter of the second section is larger than the inner diameter of the first section, so as to close valves with high flow.

In summary, the electric valve of the present disclosure adopts a design that combines the first and second valve cores to form the valve port. The first valve core is made of non-metallic material, so that when the first valve core comes into contact with the valve needle, it can achieve soft contact between the valve needle and the first valve core, thereby ensuring a good sealing effect between the valve needle and the valve port. On this basis, the second valve core is made of metal material, which is less susceptible to environmental factors such as temperature, so that the second valve core can meet the needs of flow regulation and further improve the adjustment accuracy of the electric valve.

Although the present disclosure has been described with reference to several typical embodiments, it should be understood that the terms used are illustrative and exemplary rather than restrictive. As the present disclosure can be implemented in various forms without departing from the spirit or substance of the present disclosure, it should be understood that the above embodiments are not limited to any of the aforementioned details, but should be widely interpreted within the spirit and scope limited by the accompanying claims. Therefore, all changes and modifications falling within the scope of the claims or their equivalents should be covered by the accompanying claims.

## Claims

1. An electric valve, wherein the electric valve comprising:
a valve seat with a valve cavity;
a valve needle movably arranged in the valve cavity;
a first valve core, which is arranged in the valve cavity and has a first through hole, the material of the first valve core is a non-metallic material, and the first valve core is located between the valve needle and an opening of the valve cavity; and
a second valve core, which is arranged in the valve cavity and has a second through hole, the material of the second valve core is metal material, the second valve core is adjacent to a side of the first valve core that faces the valve needle, and the second through hole and the first through hole jointly form a valve port;
wherein, when the electric valve is in a fully closed state, the valve needle passes through the second through hole and makes contact with the hole wall of the first through hole to form a seal.

2. The electric valve according to claim 1, wherein an inner diameter of a port of the valve port facing the valve needle is greater than an inner diameter of a port of the valve port facing away from the valve needle, and an inner wall of the valve port smoothly transitions between the two ports.

3. The electric valve according to claim 2, wherein an inner diameter of an orifice of the first through hole facing the valve needle is less than or equal to an inner diameter of an orifice of the second through hole facing away from the valve needle.

4. The electric valve according to claim 2, wherein an inner diameter of an orifice of the first through hole facing the valve needle is greater than an inner diameter of an orifice of the first through hole facing away from the valve needle, and a hole wall of the first through hole smoothly transitions between the two orifices.

5. The electric valve according to claim 2, wherein an inner diameter of an orifice of the second through hole facing the valve needle is greater than an inner diameter of an orifice of the second through hole facing away from the valve needle, and a hole wall of the second through hole smoothly transitions between the two orifices.

6. The electric valve according to claim 2, wherein an inner wall of the second through hole has a shape of inclined surface or curved surface.

7. The electric valve according to claim 6, wherein the inner wall of the second through hole comprises multiple inclined surfaces with different slopes or multiple curved surfaces with different radians.

8. The electric valve according to claim 1, wherein the first valve core is formed with a first annular groove at a periphery of the orifice of the side of the first through hole facing away from the valve needle.

9. The electric valve according to claim 1, wherein the second valve core is formed with a second annular groove formed at a periphery of the orifice of the side of the second through hole facing the valve needle.

10. The electric valve according to claim 1, wherein the electric valve further comprising:
a valve core sleeve, which is partially provided in the valve cavity and adjacent to a side of the first valve core facing away from the valve needle, the valve core sleeve is provided with a through channel connected to the valve port.

11. The electric valve according to claim 10, wherein the electric valve further comprises an installation substrate provided with an installation cavity, and the valve seat, the first valve core, the second valve core, and the valve core sleeve are installed within the installation cavity and detachably connected to the installation cavity.
